# FASCICULE DE BREVET EUROPEEN

(11) **EP 2 097 213 B1**
(45) Date de publication et mention de la délivrance du brevet: **12.05.2010**
(21) Numéro de dépôt: 07858524.7
(22) Date de dépôt: 08.10.2007
(51) Int. Cl.: B23Q 3/155, B23Q 3/157, B23Q 11/08

(54) **DISPOSITIF DE STOCKAGE, DE CHARGEMENT ET DE DÉCHARGEMENT D'OUTILS NOTAMMENT D'OUTILS SPÉCIAUX**
VORRICHTUNG ZUM SPEICHERN, LADEN UND ENTLADEN VON WERKZEUGEN, INSBESONDERE SPEZIALWERKZEUGEN
DEVICE FOR STORING, LOADING AND UNLOADING TOOLS, PARTICULARLY SPECIAL TOOLS

(30) Priorité: 20.10.2006 FR 0654421
(43) Date de publication de la demande: 09.09.2009
(73) Titulaire: Comau France, 78191 Trappes Cédex (FR)
(72) Inventeur: CAHUZAC, Daniel, 81600 Fenols (FR)
(74) Mandataire: Richebourg, Michel François
(86) Numéro de dépôt international: PCT/FR2007/052093
(87) Numéro de publication internationale: WO 2008/050023

(56) Documents cités:
- EP-A1- 1 291 124
- FR-A1- 2 748 225

## Description

La présente invention a trait au domaine des machines-outils et notamment aux adaptations permettant de stocker, de charger et de décharger les outils qu'elles utilisent, dans les meilleures conditions (voir, par exemple, FR-2748225 ou EP-1291124).

### DESCRIPTION DE L'ART ANTÉRIEUR

Les opérations d'usinage requièrent parfois des outillages spéciaux hors gabarit auxquels les moyens classiques de stockage, de chargement et de déchargement d'outils, ne sont pas adaptés.

Ainsi, par exemple, il existe des phases d'usinage requérant des outils longs que ne peuvent stocker les magasins d'outils dont les enceintes de protection adoptent un volume optimisé. Il en est de même pour les outils de grand diamètre.

Ces usinages étant considérés comme exceptionnels, les solutions pour les réaliser sont aujourd'hui les suivantes :
- arrêt de la machine-outil, ouverture du poste d'usinage et installation de l'outil hors gabarit,
- transfert de la pièce à usiner vers une nouvelle machine-outil exploitant l'outil hors gabarit,
- stockage dans le poste d'usinage du ou des outillages spéciaux mis à disposition ou susceptibles d'être mis à disposition,
- stockage dans une enceinte intermédiaire accueillant un ou plusieurs râteliers dédiés aux outils spéciaux et communiquant avec l'enceinte principale entourant le poste d'usinage ainsi qu'avec l'extérieur, ladite enceinte comportant des moyens de mise en mouvement faisant passer les outils de l'enceinte intermédiaire vers le poste d'usinage et vice-versa.

Les deux premières solutions présentent des inconvénients multiples, en coût, en temps d'usinage et en sécurité.

La troisième solution présente l'inconvénient de soumettre l'outil présent dans le poste d'usinage à des projections de copeaux. De plus, l'accès à un outil dans un poste d'usinage, accès nécessaire dans cette solution pour son changement, est très limité.

La quatrième solution bien que résolvant les inconvénients des trois premières, présente également plusieurs inconvénients, parmi ceux-ci :
- le volume qui doit rester libre pour une mise en mouvement d'un ou plusieurs outils d'une enceinte vers une autre, est particulièrement important et n'est pas toujours disponible,
- classiquement, l'ensemble des outils est mis en mouvement d'une enceinte vers l'autre,
- la mise à disposition de l'outil à l'intérieur du poste d'usinage n'est pas toujours suffisante.

En effet, à ces difficultés s'ajoutent les différentes configurations que peuvent prendre les machines-outils pour la prise d'outil. Certaines machines-outils mettent en oeuvre un module porte-outil dont les mouvements n'assurent pas à eux seuls ni la rentrée et la sortie de l'outil hors de son logement de stockage ni l'engagement ou le dégagement de l'outil par rapport ou module porte-outil.

La machine-outil est alors équipée d'un dispositif intermédiaire de transfert des outils entre le poste d'usinage et le module de stockage des outils. Ce dispositif intermédiaire nécessite un volume libre supplémentaire à l'intérieur de la machine de travail, volume qui peut être enlevé au poste d'usinage réduisant par conséquent les capacités d'usinage. En outre, un dispositif intermédiaire supplémentaire doit être mis en oeuvre pour les outils spéciaux puisqu'ils sont stockés dans une enceinte dédiée.

### DESCRIPTION DE L'INVENTION

Partant de cet état de fait, la demanderesse a mené des recherches qui ont abouti à la conception d'un dispositif de stockage, de chargement et de déchargement d'outils spéciaux pour une machine-outil d'usinage.

Selon l'invention, le dispositif de stockage, de chargement et de déchargement d'outils s'installe sur une machine-outil d'usinage du type de celle comportant un poste d'usinage équipé d'au moins un module porte-outil assurant la mise en mouvement d'au moins un outil à des fins d'usinage d'au moins une pièce et comportant une enceinte venant fermer ledit poste d'usinage. Ce dispositif est du type de celui constitué par au moins une poche d'accueil évoluant à l'intérieur d'une enceinte intermédiaire équipée de fenêtres d'accès dont au moins une s'ouvre sur l'intérieur du poste d'usinage et dont au moins une autre communique avec l'extérieur de la machine-outil.

Ce dispositif est remarquable en ce qu'il comprend
- au moins un module de mise en mouvement réalisant un mouvement en rotation assurant le déplacement de la poche d'outil de l'enceinte intermédiaire vers le poste d'usinage et vice-versa d'une part et un mouvement en translation assurant à l'intérieur du poste d'usinage le déplacement de la poche d'accueil de sa position d'arrivée en fin de rotation à une position d'interface avec le module porte-outil et vice-versa d'autre part,
- au moins un volet de fermeture de la fenêtre séparant le poste d'usinage de l'enceinte intermédiaire, ledit volet étant solidaire cinématiquement de la poche d'accueil de sorte que le mouvement de rotation ouvre ou ferme ladite fenêtre en même temps qu'il fait passer ladite poche par ladite fenêtre.

Cette caractéristique est particulièrement avantageuse en ce qu'elle propose une enceinte intermédiaire servant d'interface entre l'extérieur de la machine-outil et l'intérieur du poste d'usinage. Il n'est donc plus nécessaire d'arrêter la machine-outil pour mettre à disposition un outil hors gabarit. Cette caractéristique autorise une machine-outil à assumer l'ensemble des phases d'usinage d'une pièce notamment celles exigeant la mise en oeuvre d'outils hors gabarit. Cette caractéristique permet de conserver les architectures actuelles et de continuer à exploiter les moyens d'emmagasinage existants.

En outre, le moyen de mise en mouvement des poches d'accueil des outils les faisant passer de l'enceinte auxiliaire à l'enceinte formée par le poste d'usinage, assure également l'ouverture et la fermeture de la fenêtre faisant communiquer ladite enceinte auxiliaire avec ladite enceinte fermant le poste d'usinage. Plus précisément, la fenêtre d'accès au poste d'usinage s'ouvre et se ferme au moyen d'un volet qui suit les mouvements des poches d'accueil des outils.

De plus, le dispositif pallie l'absence de mobilité axiale du module porte-outil d'une machine-outil qui ne réalise la mise en mouvement de ce dernier que sur deux axes. En effet, le mouvement en translation permet d'engager ou de désengager l'outil par rapport au module porte-outil. Ainsi, avec un nombre minimal d'actionneurs, le dispositif de l'invention assure les fonctions de stockage, de manutention, d'ouverture et de fermeture du magasin d'outils ainsi que d'engagement et de dégagement de l'outil avec le module porte-outil sans nécessiter de dispositif d'échange intermédiaire.

Ces différentes possibilités d'échange avec le module porte-outil permettent au dispositif porte-outil d'assumer la fonction de dispositif de chargement ou de déchargement d'outils susceptibles d'être stockés dans un ou plusieurs dispositifs d'emmagasinnage plus classiques ou non avec lesquels le module porte-outil coopère pour disposer des outils nécessaires aux phases d'usinage qu'il assure.

Selon une autre caractéristique, le dispositif comprend une pluralité de poches d'accueil pour outil, ces poches étant indépendantes les unes des autres ou solidaires les unes des autres. Ainsi, il est possible de mettre à disposition ou de décharger une pluralité d'outils pendant le fonctionnement de la machine-outil.

Cette indépendance ou cette solidarisation permettent de rendre indépendantes certaines parties de l'enceinte. Ainsi, selon une autre caractéristique particulièrement avantageuse de l'invention, l'enceinte auxiliaire est cloisonnée pour former une pluralité de compartiments dans lesquels sont logées les poches d'accueil.

Ainsi, chaque compartiment peut comporter au moins un module de mise en mouvement indépendant et chaque compartiment peut être aménagé d'une fenêtre d'accès au poste d'usinage ou d'accès de l'extérieur.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'un dispositif conforme à l'invention.

### BRÈVE DESCRIPTION DES DESSINS

La figure 1 est un dessin schématique d'une vue en coupe partielle de dessus d'une machine-outil équipée d'un mode de réalisation du dispositif,
La figure 2 est un dessin schématique d'une vue en perspective de l'intérieur du mode de réalisation du dispositif illustré en figure 1,
Les figures 3a, 3b, 3c, 3d, 3e, 3f, 3g, sont des schémas illustrant le fonctionnement du dispositif.

### DESCRIPTION DES MODES DE RÉALISATION PRÉFÉRÉS

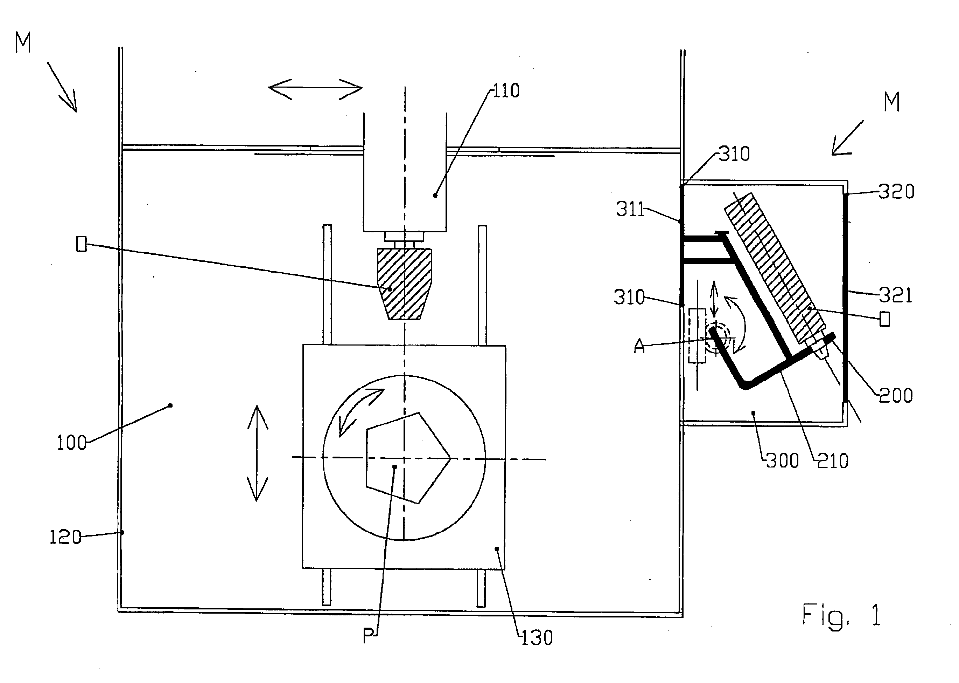

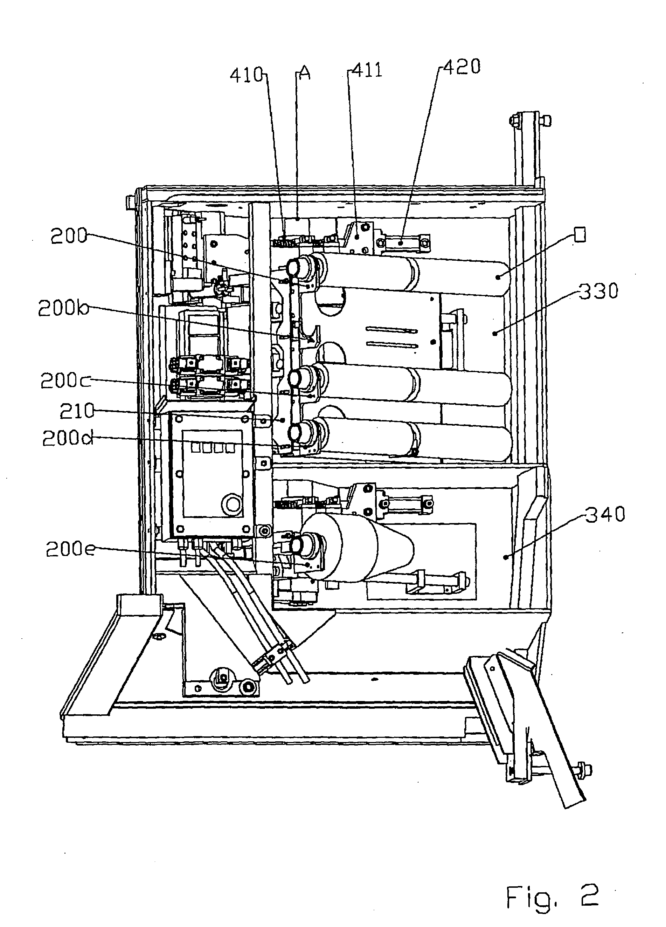

Tel qu'illustré sur le dessin de la figure 1, ce dispositif référencé D de stockage, de chargement et de déchargement d'outils spéciaux O est installé sur une machine-outil d'usinage M du type de celle comportant un poste d'usinage 100 équipé d'au moins un module porte-outil 110 assurant la mise en mouvement d'au moins un outil O à des fins d'usinage d'au moins une pièce P et comportant une enceinte 120 venant fermer ledit poste d'usinage 100. Ce dispositif D est remarquable en ce qu'il est constitué par au moins une poche d'accueil 200 d'un outil O stocké dans une enceinte auxiliaire 300 dont les dimensions sont adaptées pour le stockage des outils hors gabarit et qui est équipée d'ouvertures 310 et 320 et de moyens de fermeture 311 et 321 desdites ouvertures 310 et 320, les ouvertures donnant d'une part pour l'ouverture 320 sur l'extérieur de la machine-outil M et d'autre part pour l'ouverture 310 sur l'intérieur du poste d'usinage 100 de la machine-outil M. Ladite poche d'accueil 200 est équipée d'un module de mise en mouvement 400 (cf figure 2) combinant une mise en mouvement en rotation assurant le déplacement de la poche d'outil 200 de l'enceinte intermédiaire 300 vers le poste d'usinage 100 et vice-versa à une mise en mouvement en translation assurant à l'intérieur du poste d'usinage 100 le déplacement de la poche d'accueil 200 de sa position d'arrivée en fin de rotation à une position d'interface avec le module porte-outil 110 et vice-versa. Les différentes positions prises par la ou les poches 200 sont décrites ci-après.

Comme illustré sur le dessin de la figure 2, le dispositif D comprend une pluralité de poches d'accueil 200, 200b, 200c, 200d, 200e pour outil O, ces poches étant indépendantes les unes des autres ou solidaires les unes des autres. Selon le mode de réalisation illustré, l'enceinte auxiliaire 300 constituant le dispositif D est cloisonnée. Ce cloisonnement en deux compartiments définit un compartiment supérieur 330 regroupant quatre poches d'accueil 200, 200b, 200c et 200d et un compartiment inférieur 340 dans lequel se trouve la poche 200e. Chaque compartiment est équipé d'une fenêtre permettant de communiquer séparément avec le poste d'usinage 100 ainsi que d'un moyen de fermeture de ladite fenêtre.

Selon le mode de réalisation illustré et conformément à l'invention, les poches d'accueil 200, 200b, 200c, 200d sont réunies sur un même râtelier 210 lequel est lié à un moyen de mise en mouvement.

Conformément à l'invention chaque compartiment, comprend un module de mise en mouvement indépendant faisant passer les poches d'accueil des outils de l'enceinte auxiliaire 300 au poste d'usinage 100 et vice-versa.

Comme illustrée, l'enceinte auxiliaire 300 forme un parallélépipède et l'axe des outils et des poches d'accueil les supportant est orienté selon une diagonale du rectangle dans lequel ils s'inscrivent. Cette disposition permet de diminuer les dimensions de l'enceinte auxiliaire 300 et d'orienter les outils dans une position idéale pour le mouvement qu'ils vont suivre lors de leur changement d'enceinte.

Selon le choix technologique de la demanderesse et conformément à l'invention, le mouvement des poches d'accueil est un mouvement de rotation autour d'un axe perpendiculaire à l'axe des outils ou des poches d'accueil, cet axe étant référencé A sur les dessins. Comme illustré, ce point de rotation A se trouve à l'intérieur de l'enceinte auxiliaire 300. De plus, la poche d'accueil 200 est déportée par rapport à ce point de rotation A. Ce déport et l'orientation des outils selon la diagonale de l'enceinte évitent une trop grande fenêtre de communication avec le poste d'usinage et diminuent le volume libre nécessaire pour le déplacement de la poche 200 et du volet 311 à l'intérieur dudit poste d'usinage 100.

Selon une caractéristique particulièrement avantageuse, le volet de fermeture des fenêtres permettant la communication entre le poste d'usinage et l'enceinte 300 ou les compartiments 330 et 340 de l'enceinte 300 est solidaire dans leur mouvement de la ou des poches 200 présentes dans ce compartiment.

Ainsi, le volet 331 fermant le compartiment supérieur suit les mouvements du râtelier 210.

Comme illustré sur le dessin de la figure 1, la machine-outil M comporte un module porte outil 110 se déplaçant selon deux axes perpendiculaire à l'axe de plongée de l'outil O. Le mouvement en translation selon cet axe est assumé par le chariot 130 porte pièce P. L'enceinte auxiliaire 300 est comprise dans le volume du poste d'usinage 100. Ainsi, le module porte-outil n'assure pas les mouvements d'engagement et de dégagement des outils par rapport à leur poche d'accueil. Pour assumer ces mouvements, le module de mise en mouvement des poches réalise deux types de mouvements :
- un mouvement de rotation des poches permettant de les faire entrer ou sortir du poste d'usinage 100,
- un mouvement de translation assurant l'engagement ou le dégagement de l'outil par rapport au module d'usinage lorsque la poche se trouve dans le poste d'usinage.

Selon le mode de réalisation illustré par le dessin de la figure 2, le mouvement de rotation est mis en oeuvre par un vérin rotatif 410 et le mouvement de translation est mis en oeuvre par un vérin 420. Comme expliqué plus haut, chaque compartiment comprend un vérin rotatif et un vérin à course rectiligne. Bien entendu, les courses de ces vérins correspondent aux courses nécessaires à la mise en place des poches d'accueil selon un axe parallèle à l'axe de rotation des outils dans le poste d'usinage d'une part et aux courses nécessaires pour l'engagement et le dégagement de l'outil par rapport au module porte-outil d'autre part. Selon le mode de réalisation préféré illustré, le vérin rotatif 410 auquel est lié le râtelier 210 est solidaire d'un chariot de guidage en translation 411 mis en mouvement par ledit vérin 420 qui est lui fixe par rapport à l'enceinte.

Le déport des poches et des volets par rapport à l'axe de rotation A est mis en oeuvre par au moins un bras 220 coudé et disposé dans un plan perpendiculaire à l'axe A de rotation lié à une extrémité à l'élément tournant du vérin rotatif 410 et supportant à son autre extrémité ladite poche d'accueil 200. Ce bras 220 comporte en outre un bras auxiliaire disposé entre ses deux extrémités et supportant ledit volet 311.

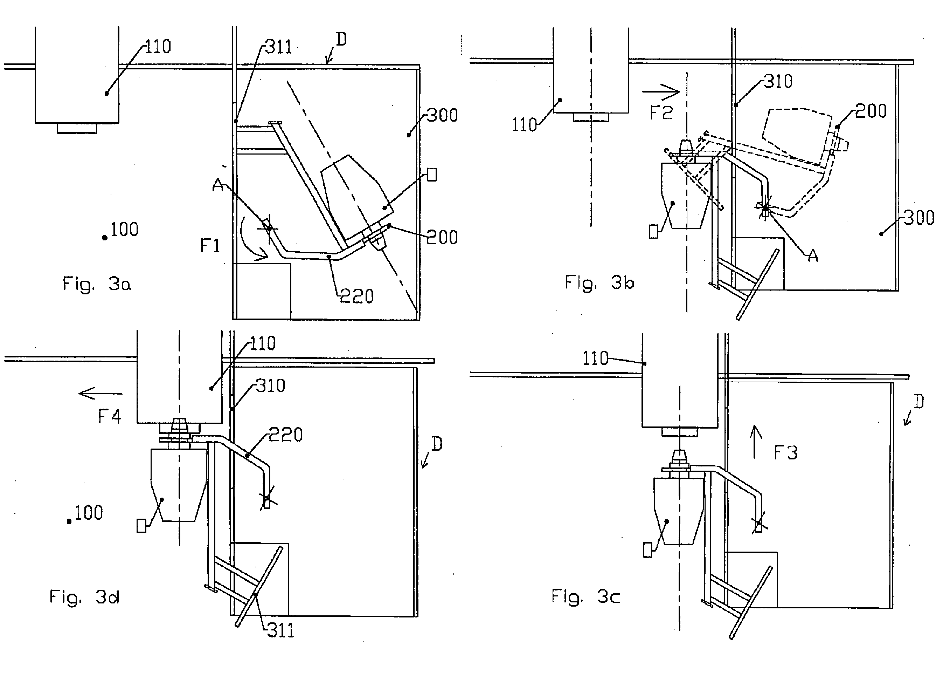

Les mouvements sont décrits en regard des dessins des figures 3a à 3g.

Comme illustré sur le dessin de la figure 3a, un outil de grand diamètre O est disponible dans une poche d'accueil 200 de l'enceinte 300 constituant le dispositif D et comprise dans le volume du poste d'usinage 100 d'une machine-outil M dans lequel évolue un module porte-outil 110.

Comme illustré sur le dessin de la figure 3b, un mouvement de rotation selon la flèche F1 et selon l'axe A, déplace le volet de fermeture 311 pour ouvrir la fenêtre 310 et ainsi autoriser le passage de l'outil O de l'enceinte 300 vers le poste d'usinage 100. Ce mouvement de rotation amène l'axe de la poche dans une position parallèle à l'axe du module porte-outil. Le module porte-outil peut alors se positionner coaxialement à l'axe de outil O selon un mouvement notamment transversal selon la flèche F2.

Comme illustré sur le dessin de la figure 3c, le bras assurant le support de la poche d'accueil dans laquelle est installé l'outil O réalise un mouvement de translation selon la flèche F3 vers le module porte-outil afin d'engager l'outil O dans ce dernier.

Une fois engagé et l'outil pris par les moyens de serrage du module porte-outil 110, ce dernier peut se dégager en assurant un mouvement de translation vers le haut ou selon la flèche F4, comme illustré sur le dessin de la figure 3d, la direction du mouvement de dégagement dépendant de l'orientation des branches de berceau formé par la poche 200.

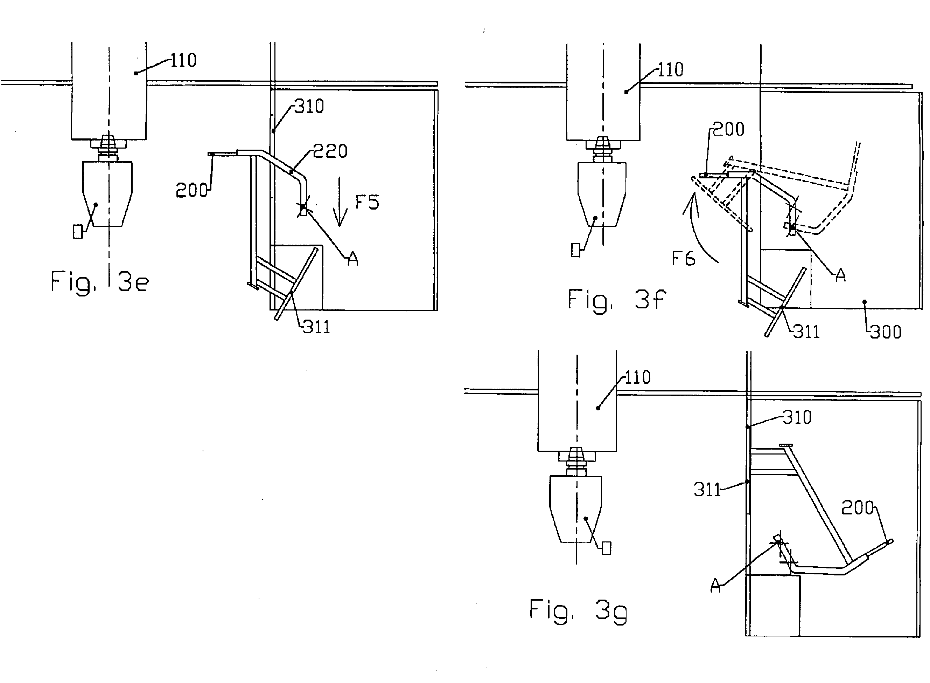

Comme illustré sur le dessin de la figure 3e, la poche d'accueil 200 vide suit alors un mouvement de translation selon la flèche F5 dans le sens contraire à F3 afin de revenir dans la position illustrée par le dessin de la figure 3f et amorcer un mouvement de rotation selon la flèche F6 pour que la poche puisse revenir en position dans l'enceinte 300 comme illustrée sur le dessin de la figure 3g.

On comprend que le dispositif, qui vient d'être ci-dessus décrit et représenté, l'a été en vue d'une divulgation plutôt que d'une limitation. Bien entendu, divers aménagements, modifications et améliorations pourront être apportés à l'exemple ci-dessus, sans pour autant sortir du cadre de l'invention.

## Revendications

1. Dispositif (D) de stockage, de chargement et de déchargement d'outils (O) pour une machine-outil d'usinage (M) du type de celle comportant un poste d'usinage (100) équipé d'au moins un module porte-outil (110) assurant la mise en mouvement d'au moins un outil (O) à des fins d'usinage d'au moins une pièce (P) et comportant une enceinte (120) venant fermer ledit poste d'usinage (100), le dispositif (D) étant du type de celui constitué par au moins une poche d'accueil (200) évoluant à l'intérieur d'une enceinte intermédiaire (300) équipée de fenêtres d'accès dont au moins une (310) s'ouvre sur l'intérieur du poste d'usinage (100) et au moins une communiquant avec l'extérieur de la machine-outil (M),
**CARACTÉRISÉ PAR LE FAIT QU'**il comprend
- au moins un module de mise en mouvement (400) combinant un mouvement en rotation assurant le déplacement de la poche d'outil (200) de l'enceinte intermédiaire (300) vers le poste d'usinage (100) et vice-versa d'une part à un mouvement en translation assurant à l'intérieur du poste d'usinage (100) le déplacement de la poche d'accueil (200) de sa position d'arrivée en fin de rotation à une position d'interface avec le module porte-outil (110) et vice-versa d'autre part,
- au moins un volet de fermeture (311) de la fenêtre (310) séparant le poste d'usinage (100) de l'enceinte intermédiaire (300), ledit volet (311) étant solidaire cinématiquement de la poche (200) de sorte que le mouvement de rotation ouvre ou ferme ladite fenêtre (310) en même temps qu'il fait passer ladite poche (200) par ladite fenêtre (310).

2. Dispositif (D) selon la revendication 1, **CARACTÉRISÉ PAR LE FAIT QU'**il comprend une pluralité de poches d'accueil (200) pour outil, ces poches étant indépendantes les unes des autres.

3. Dispositif selon la revendication 1, **CARACTÉRISÉ PAR LE FAIT QU'**il comprend une pluralité de poches d'accueil (200) pour outil (O), ces poches étant solidaires les unes des autres pour former un ou plusieurs râteliers (210).

4. Dispositif (D) selon la revendication 1, **CARACTÉRISÉ PAR LE FAIT QUE** l'enceinte auxiliaire (300) est cloisonnée pour former une pluralité de compartiments (330, 340) dans lesquels sont logées les poches d'accueil (200).

5. Dispositif (D) selon la revendication 1, **CARACTÉRISÉ PAR LE FAIT QUE** chaque compartiment (330, 340) comporte au moins un module de mise en mouvement indépendant (400).

6. Dispositif (D) selon la revendication 4, **CARACTÉRISÉ PAR LE FAIT QUE** lesdits compartiments (330, 340) sont ménagés chacun d'une fenêtre (331) d'accès au poste d'usinage (100).

7. Dispositif (D) selon la revendication 1, **CARACTÉRISÉ PAR LE FAIT QUE** les poches d'accueil (200) sont liées séparément ou à plusieurs à un module de mise en mouvement (400).

8. Dispositif (D) selon la revendication 1, **CARACTÉRISÉ PAR LE FAIT QUE** l'axe de rotation (A) des poches d'accueil est perpendiculaire à l'axe des outils (O) stockés.

9. Dispositif (D) selon la revendication 1, **CARACTÉRISÉ PAR LE FAIT QUE** le mouvement en translation engage ou désengage l'outil (O) par rapport au module porte-outil (110).

10. Dispositif (D) selon la revendication 1, **CARACTÉRISÉ PAR LE FAIT QUE** les sous-ensembles (410 et 420) constituant le module de mise en mouvement (400) sont contenus dans ladite enceinte intermédiaire (300).

## Claims

1. Device (D) for storing, loading and unloading tools (O) for a machine tool for machining (M) of the type of that comprising a machining station (100) equipped with at least one tool holder module (110) providing the putting into movement of at least one tool (O) for the purposes of machining of at least one part (P) and comprising an enclosure (120) enclosing said machining station (100),
the device (D) being of the type of that constituted of at least one receiving pocket (200) moving inside an intermediary enclosure (300) equipped with access windows of which at least one (310) opens onto the inside of the machining station (100) and at least one communicating with the outside of the machine tool (M),
**CHARACTERISED BY** THE FACT THAT it comprises
- at least one module for putting into movement (400) combining a rotating movement providing the displacement of the tool pocket (200) of the intermediary enclosure (300) towards the machining station (100) and vice-versa on the one hand with a translation movement providing inside the machining station (100) the displacement of the receiving pocket (200) from its arrival position at the end of rotation to an interface position with the tool holder module (110) and vice-versa on the other hand,
- at least one flap for closing (311) the window (310) separating the machining station (100) from the intermediary enclosure (300), said flap (311) being kinematically attached to the pocket (200) in such a way that the rotating movement opens or closes said window (310) at the same time that it has said pocket (200) pass by said window (310).

2. Device (D) according to claim 1, **CHARACTERISED BY** THE FACT THAT it comprises a plurality of receiving pockets (200) for tools, these pockets being independent one from the other.

3. Device according to claim 1, **CHARACTERISED BY** THE FACT THAT it comprises a plurality of receiving pockets (200) for tools (O), these pockets being attached together in order to form one or several racks (210).

4. Device (D) according to claim 1, **CHARACTERISED BY** THE FACT THAT the auxiliary enclosure (300) is partitioned in order to form a plurality of compartments (330, 340) wherein are housed the receiving pockets (200).

5. Device (D) according to claim 1, **CHARACTERISED BY** THE FACT THAT each compartment (330, 340) comprises at least one independent module for putting into movement (400).

6. Device (D) according to claim 4, **CHARACTERISED BY** THE FACT THAT said compartments (330, 340) are arranged each with an access window (331) to the machining station (100).

7. Device (D) according to claim 1, **CHARACTERISED BY** THE FACT THAT the receiving pockets (200) are connected separately or severally to a module for putting into movement (400).

8. Device (D) according to claim 1, **CHARACTERISED BY** THE FACT THAT the axis of rotation (A) of the receiving pockets is perpendicular to the axis of the stored tools (0).

9. Device (D) according to claim 1, **CHARACTERISED BY** THE FACT THAT the translation movement engages or disengages the tool (O) in relation to the tool holder module (110).

10. Device (D) according to claim 1, **CHARACTERISED BY** THE FACT THAT the subsystems (410 and 420) constituting the module for putting into movement (400) are contained in said intermediary enclosure (300).

## Patentansprüche

1. Vorrichtung (D) zum Lagern, Aufladen und Entladen von Werkzeugen (O) für eine Bearbeitungswerkzeugmaschine (M) von der Art, die eine Bearbeitungsstation (100) umfasst, die mit mindestens einem Werkzeughaltermodul (110) ausgestattet ist, das die Ingangsetzung mindestens eines Werkzeugs (O) zwecks Bearbeitung mindestens eines Werkstücks (P) sicherstellt, und die ein Gehäuse (120) umfasst, das die Bearbeitungsstation (100) umschließt,
wobei die Vorrichtung (D) von der Art ist, die aus mindestens einer Aufnahmeablage (200) besteht, die sich im Innern eines Zwischengehäuses (300) bewegt, das mit Zugriffsfenstern versehen ist, von denen sich mindestens eines (310) zum Innern der Bearbeitungsstation (100) öffnet und mindestens eines mit dem Äußern der Werkzeugmaschine (M) in Verbindung steht,
**dadurch gekennzeichnet, dass** sie folgendes umfasst:
- mindestens ein Ingangsetzungsmodul (400), das eine Drehbewegung, welche die Verschiebung der Werkzeugablage (200) vom Zwischengehäuse (300) zur Bearbeitungsstation (100) und umgekehrt sicherstellt, einerseits mit einer Translationsbewegung, die im Innern der Bearbeitungsstation (100) die Verschiebung der Aufnahmeablage (200) von ihrer Position bei Erreichen des Endes der Drehung zu einer Schnittstellenposition mit dem Werkzeughaltermodul (110) und umgekehrt sicherstellt, andererseits kombiniert,
- mindestens eine Schließklappe (311) des Fensters (310), das die Bearbeitungsstation (100) von dem Zwischengehäuse (300) trennt, wobei die Klappe (311) kinematisch mit der Ablage (200) fest verbunden ist, so dass die Drehbewegung das Fenster (310) öffnet oder schließt und dabei die Ablage (200) durch das Fenster (310) führt.

2. Vorrichtung (D) nach Anspruch 1, **dadurch gekennzeichnet, dass** sie eine Vielzahl von Aufnahmeablagen (200) für Werkzeuge umfasst, wobei diese Ablagen voneinander unabhängig sind.

3. Vorrichtung nach Anspruch 1, **dadurch gekennzeichnet, dass** sie eine Vielzahl von Aufnahmeablagen (200) für Werkzeuge (O) umfasst, wobei diese Ablagen miteinander fest verbunden sind, um ein oder mehrere Gestelle (210) zu bilden.

4. Vorrichtung (D) nach Anspruch 1, **dadurch gekennzeichnet, dass** das Hilfsgehäuse (300) unterteilt ist, um eine Vielzahl von Fächern (330, 340) zu bilden, in denen die Aufnahmeablagen (200) untergebracht sind.

5. Vorrichtung (D) nach Anspruch 1, **dadurch gekennzeichnet, dass** jedes Fach (330, 340) mindestens ein eigenständiges Ingangsetzungsmodul (400) umfasst.

6. Vorrichtung (D) nach Anspruch 4, **dadurch gekennzeichnet, dass** die Fächer (330, 340) jeweils mit einem Fenster (331) zum Zugriff auf die Bearbeitungsstation (100) versehen ist.

7. Vorrichtung (D) nach Anspruch 1, **dadurch gekennzeichnet, dass** die Aufnahmeablagen (200) einzeln oder zu mehreren mit einem Ingangsetzungsmodul (400) verbunden sind.

8. Vorrichtung (D) nach Anspruch 1, **dadurch gekennzeichnet, dass** die Drehachse (A) der Aufnahmeablagen zur Achse der gelagerten Werkzeuge (O) rechtwinklig ist.

9. Vorrichtung (D) nach Anspruch 1, **dadurch gekennzeichnet, dass** die Translationsbewegung das Werkzeug (O) im verhältnis zu dem Werkzeughaltermodul (110) in Eingriff bringt oder daraus löst.

10. Vorrichtung (D) nach Anspruch 1, **dadurch gekennzeichnet, dass** die Teilsysteme (410 und 420), die das Ingangsetzungsmodul (400) bilden, in dem Zwischengehäuse (300) enthalten sind.
